# EUROPEAN PATENT APPLICATION

(11) **EP 1 924 008 A1**
(43) Date of publication of application: **21.05.2008**
(21) Application number: 08004269.0
(22) Date of filing: 11.06.2003
(51) Int. Cl.: H04B 7/14

(54) **Wireless local area network repeater**

(30) Priority: 21.06.2002 US 390093 P
(62) Divisional of application: 03734136.9
(71) Applicant: Qualcomm Incorporated, San Diego, CA 92121 (US)
(72) Inventor: Proctor, James A., Melbourne, Florida 32901 (US); Gainey, Kenneth M., Melbourne, Florida 32901 (US)
(74) Representative: Winter, Brandl, Fürniss, Hübner Röss, Kaiser, Polte Partnerschaft Patent- und Rechtsanwaltskanzlei

(57) **Abstract**

A repeater (200) facilitates wireless communication between a first communication device (100) and a second communication device (105) in a wireless network using a time division duplex protocol for data transmission. The repeater (200) includes a receiver (310, 315) for receiving a signal on either of at least two bi-directional communication frequencies simultaneously. A signal detector (362) is operatively coupled to the receiver (300, 310, 315) for determining if the signal is present on at least one of the two bi-directional frequencies. A frequency converter (320, 321, 323, 324, 360, 361) is for converting the signal present on one of the bi-directional frequencies to a converted signal on the other of the bi-directional frequencies. A transmitter (300, 325, 330, 335, 345, 350) is for transmitting the converted signal on the other of said bi-directional frequencies.

## Description

### CROSS-REFERENCE TO RELATED APPLICATION

This application is related to, and claims priority from, a provisional application filed on June 21, 2002, entitled REPEATER FOR WLAN and identified by serial no. 60/390,093.

### FIELD OF THE INVENTION

The present invention relates generally to wireless communications and more specifically to a repeater for increasing the coverage of wireless networks.

### BACKGROUND OF THE INVENTION

Several standard protocols for wireless local area networks, commonly referred to as WLAN_{S}, are becoming popular. These include protocols such as 802.11 (as set forth in the 802.11 wireless standards), home RF, and Bluetooth. The standard wireless protocol with the most commercial success to date is the 802.11b protocol.

While the specifications of products utilizing the above standard wireless protocols commonly indicate data rates on the order of, for example, 11 MBPS and ranges on the order of, for example, 100 meters, these performance levels are rarely, if ever, realized. This lack of performance is due to attenuation of the radiation paths of RF signals, which are typically in the range of 2.4 GHz, in an indoor environment. Base to receiver ranges are generally less than the coverage range required in a typical home, and may be as little as 10 to 15 meters. Further, in structures that have split floor plans, such as ranch style or two story homes, or that are constructed of materials that attenuate RF signals, areas in which wireless coverage is needed may be physically separated by distances outside of the range of, for example, an 802.11 protocol based system. Finally, the data rates of the above standard wireless protocols are dependent on the signal strength. As distances in the area of coverage increase, wireless system performance typically decreases.

One way to increase the range of wireless systems is by the use of repeaters. This is a common practice in the mobile wireless industry. One significant complication is that the system receivers and transmitters operate at the same frequency for a WLAN utilizing 802.11 or 802.16 WMAN wireless protocol. Such operation is commonly referred to as time division duplexing. This operation is significantly different than the operation of many cellular repeater systems, such as those systems based on IS-136, IS-95 or IS-2000 standards, where the receive and transmit bands are separated by a duplexing frequency offset. Frequency division duplexing makes the repeater operation easier than in the case where the receiver and transmitter channels are on the same frequency.

There are, however, cellular mobile systems that separate the receive and transmit channels by time rather than by frequency. These systems utilize scheduled times for specific uplink/downlink transmissions. Repeaters for these systems are easily built, as the transmission and reception times are well known and are broadcast by a base station. Receivers and transmitters for these systems may be isolated by any number of means including physical separation, antenna patterns, or polarization isolation.

The random packet nature of the WLAN protocols provides no defined receive and transmit periods. The packets from each wireless network node are spontaneously generated and transmitted and are not temporally predictable. A protocol referred to as a collision avoidance and random back-off protocol is used to avoid two units transmitting their packets at the same time. For 802.11 standard protocol, this is referred to as the distributed coordination function (DCF).

WLAN repeaters have unique constraints due to the above spontaneous transmission capabilities and therefore require a unique solution. Another unique requirement is that, since these repeaters use the same frequency for receive and transmit, some form of isolation must exist between the receiver and transmitter of the receivers. While existing CDMA systems employ directional antennas and physical separation of the receive and transmit antennas to achieve this isolation, such techniques are not practical for WLAN repeaters in many operating environments such as in the home where lengthy cabling is not desirable or may be too costly.

### SUMMARY OF THE INVENTION

The wireless repeater of the present invention solves the above-discussed issues regarding spontaneous transmission and transceiver isolation through the use of a unique frequency detection and translation method. The wireless repeater enables two WLAN units to communicate by translating the packets from a first frequency channel used by one device to a second frequency channel used by a second device. The direction of the conversion from the first frequency channel to the second frequency channel versus conversion from the second frequency channel to the first frequency channel is dependent upon real time configuration. The repeater monitors both channels for transmissions and, when a transmission on a channel is detected, translates the received signal to the other channel, where it is transmitted.

The wireless repeater of the present invention therefore enables high-speed communication among transmitters and receivers that might otherwise be isolated from one another in a conventional WLAN environment. Further, the repeater is small and relatively inexpensive, and avoids spontaneous transmission by monitoring and responding in reaction to the transmissions.

### BRIEF DESCRIPTION OF THE DRAWINGS

Figure 1 is a block diagram of a wireless network including a WLAN repeater according to a preferred embodiment of the present invention.

Figure 2 is a detailed block diagram of the repeater shown in Figure 2.

Figure 3 is a detailed block diagram of an alternative front end for the repeater shown in Figure 2 utilizing dual orthogonally polarized antennas.

Figure 4 us a detailed block diagram of an alternative front end for the repeater shown is Figure 2 utilizing dual directional antennas and switches.

### DETAILED DESCRIPTION OF THE INVENTION

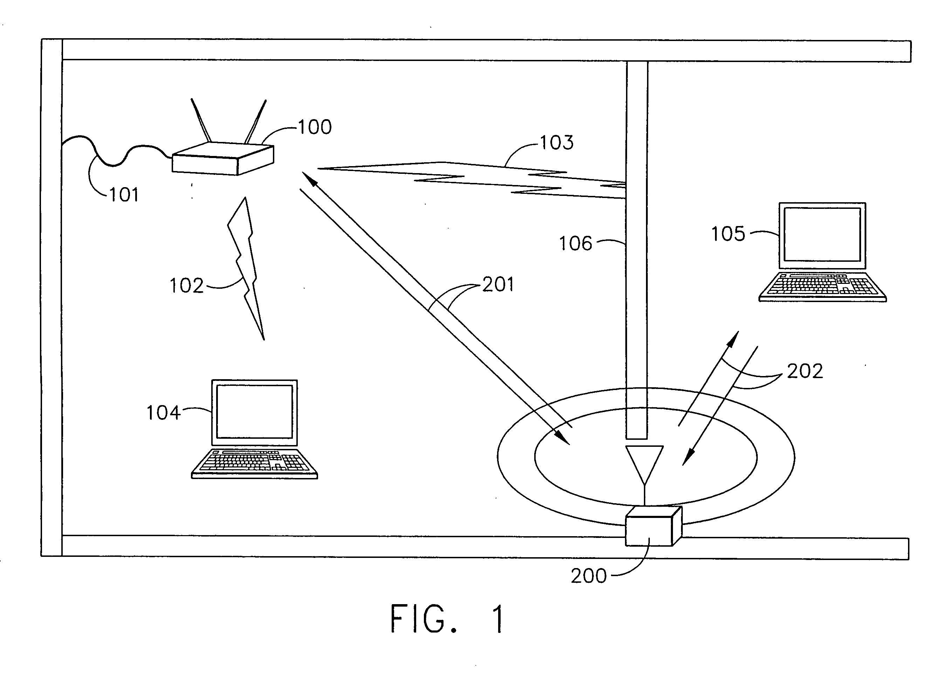

Referring now to Figure 1, a wide area connection 101, which could be an Ethernet connection, a T1 line, a wideband wireless connection or any other electrical connection providing data communication, is connected to a wireless gateway, or access point, 100. The wireless gateway 100 sends RF signals, such as IEEE 802.11 packets or signals based upon Bluetooth, Hyperlan, or other wireless communication protocols, to client devices 104, 105, which may be personal computers, personal digital assistants, or any other device capable of communicating with other like devices through one of the above mentioned wireless protocols. Respective propagation, or RF, paths to each of the client devices are shown as 102,103.

While the signal carried over RF path 102 is of sufficient strength to maintain high-speed data packet communications between the client device 104 and the wireless gateway 100, the signals carried over the RF path 103 and intended for the client device 105 would be attenuated when passing through a structural barrier such as a wall 106 to a point where few, if any, data packets are received in either direction if not for a wireless repeater 200, the structure and operation of which will now be described.

To enhance the coverage and/or communication data rate to the client device 105, the wireless repeater 200 receives packets transmitted on a first frequency channel 201 from the wireless gateway 100. The wireless repeater 200, which may have dimensions of, for example, 2.5"x3.5"x.5", and which preferably is capable of being plugged into a standard electrical outlet and operating on 110 V AC power, detects the presence of a packet on the first frequency channel 201, receives the packet and re-transmits the packet with more power on a second frequency channel 202. Unlike conventional WLAN operating protocols, the client device 105 operates on the second frequency channel, even though the wireless gateway 100 operates on the first frequency channel. To perform the return packet operation, the wireless repeater 200 detects the presence of a transmitted packet on the second frequency channel 202 from the client device 105, receives the packet on the second frequency channel 202, and re-transmits the packet on the first frequency channel 201. The wireless gateway 100 then receives the packet on the first frequency channel 201. In this way, the wireless repeater 200 is capable of simultaneously receiving and transmitting signals as well as extending the coverage and performance of the wireless gateway 100 to the client device 105.

It should also be appreciated that the wireless repeater 200 may be utilized in a similar manner to enhance communications in a peer-to-peer network from one client device to another client device. When there are many units that are isolated form one another, the wireless repeater 200 acts as a wireless hub allowing two different groups of units to communicate where standard RF propagation and coverage would otherwise not enable the units to communicate.

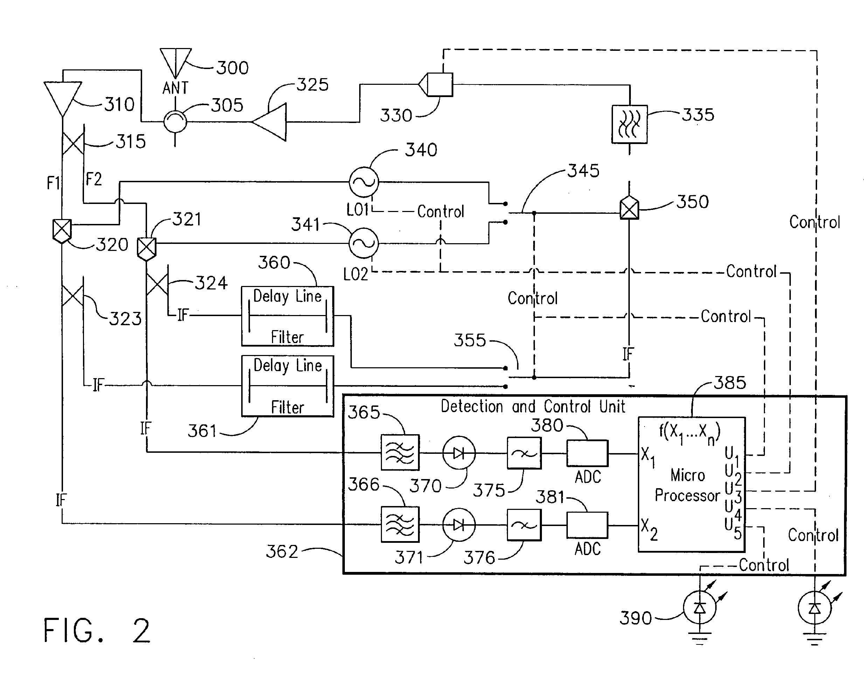

Figure 2 shows the wireless repeater 200 in more detail. Key features of the wireless repeater 200 are its ability receive a signal and translate the frequency of the received signal from a first bi-directional frequency to a second bi-directional frequency with very little distortion of the signal. This is made possible by fast signal detection and delay of the received signal long enough to determine proper control actions.

Radio waves propagate from various wireless devices such as the client devices 104,105 in Figure 1 and become incident to antenna 300, which, as is known to those of ordinary skill in the art, is an electromagnetic to voltage transducer. In a preferred embodiment this could be a single omni directional antenna tuned and matched to the frequencies of interest. Other embodiments could include, but are not limited to, directional planar antennas, dual antenna elements, polarized antenna elements and directional arrays.

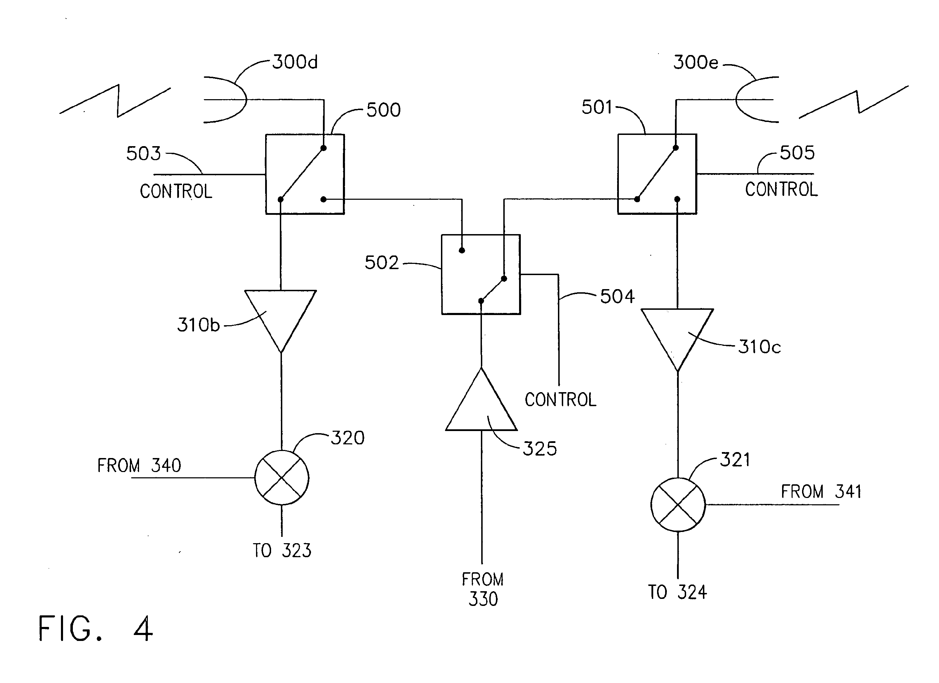

The antenna 300 shown in Figure 2 transforms received radio waves to a voltage signal and feeds the voltage signal to an isolator 305. Alternatively, the isolator may not be included depending upon the type of antenna configuration utilized. Two such antenna configurations will be described below. The isolator 305 allows a signal to pass from the antenna 300 to a Low Noise Amplifier (LNA) 310 and from a power amplifier 325 to the antenna 300, but blocks or isolates the LNA 310 from the power amplifier 325. Other embodiments of the isolator 305 could include, but are not limited to, circulators, directional couplers, splitters, and switches. For instance, switches may be used with the dual directional antenna configuration to be described in Figure 4. A signal received and transformed by the antenna 300 that passes through the isolator 305 is fed to the LNA 310, which amplifies the signal and sets the noise level at that point. A signal amplified by the LNA 310 is fed to an RF splitter 315, which performs an RF power splitting, or coupling, function on the signal to split the signal into two different paths. The splitter 315 could also be a directional coupler or any device that can separate one signal into two signals.

At this point, one skilled in the art will readily recognize that the antenna 300, the LNA 310 and the RF splitter 315 are the primary components forming a receiver in the repeater 200. Further, one skilled in the art will readily recognize that the antenna 300, the power amplifier 325, the amplifier 330, the filter 335, the switch 345 and the mixer 350 are the primary components forming a transmitter in the repeater 200.

Mixers 320, 321 are frequency conversion devices that mix signals passed from the splitter 315 with signals output from the local oscillators 340, 341 at respective frequencies designated as LO1 LO2 to produce intermediate frequency (IF) or typically lower frequency signals. The local oscillators 340, 341 are tuned to the different frequencies LO1, LO2 such that two different signals at two different frequencies fed from the splitter 315 can be converted to a common IF frequency. For example, if signals at two different frequencies F1=2.412GHz and F2=2.462 are output from the splitter 315 to the mixers 320, 321, respectively, and assuming the mixer 320 is performing a low side mixing function and the mixer 321 is performing a high side mixing function, then with the local oscillator 340 tuned to LO1=2.342GHz and the local oscillator 341 tuned to LO2=2.532GHz and providing inputs to the mixers 320, 321, respectively, the signals output from mixers 320, 321 would each have their frequencies transformed to an IF of 70MHz.

The splitters 323, 324, which operate the same as the splitter 315 described above, separate the IF signals output from the respective mixers 320, 321 into two different paths. One path from each of the splitters 323, 324 goes to filters 360, 361, respectively, while the other path from each of the splitters 323, 324 goes to filters 365, 366, respectively.

The filters 360, 361, which are preferably band pass filters with delays, remove all outputs from the mixing operation except the desired frequency components. Preferably, the filters 360, 361 have a sufficient time delay such that the detection and control unit 362 can detect which of the two RF frequencies is present and perform control functions described below prior to the signals being available at the output of the filters 360, 361, as detectors 370, 371 are in parallel with the delay filters 360, 361. Methods of delaying electrical signals are well known to those of ordinary skill in the art, and include but are not limited to Surface Acoustic Wave (SAW) devices and the like. However, if it is acceptable to truncate a portion of the first part of the RF signal, then the filters 360, 361 would not need specified delays.

One skilled in the art will readily recognize that the mixers 320, 321, the splitters 323, 324 and the filters 360, 361 are the primary components forming a frequency converter in the repeater 200.

The filters 365, 366 in the detection and control unit 362 also perform the same type of band pass filtering as the filters 360, 361. The main difference is that the filters 365, 366 are preferably fast filters without specified long time delays. Additionally, the filters 365, 366 preferably do not require the same level of filtering performance as the filters 360, 361, although one skilled in the art would recognize that varying filter performance within the confines of performing the filtering objective is a design choice. One skilled in the art would also recognize that filters or devices other than band pass filters might be used to perform the above discussed band pass functions.

Power detectors 370, 371 are simple power detection devices that detect if a signal is present on either of the respective frequencies F1, F2 and provide a proportional voltage output if the signal is present. Many types of analog detectors that perform this function may be used. For example, such detectors could include, but are not limited to, diode detectors. Such diode detection could be performed at RF, IF or base band. Detectors providing higher performance than simple power detectors may be used as well. These detectors may be implemented as matched filtering at RF or IF using SAW devices, and matched filtering or correlation at base band after analog to digital conversion. The power detectors 370, 371 are utilized to determine the presence of a wireless transmission on one of the two IF channels by comparing signals on the two IF channels with a threshold. Such a threshold could be predetermined or calculated based on monitoring the channels over time to establish a noise floor.

Further, the power detectors 370, 371 may be used to determine start and stop times of a detected transmission. The proportional voltage output by one of the power detectors 370, 371 in response to signal detection will be used by the microprocessor 385 to control the retransmission of the signal as is described below. One of ordinary skill in the art will recognize that the power detection can be placed earlier or later in the signal processing path, as it is possible to detect signals so that the retransmission process may be switched on or off. Further, one of ordinary skill in the art will recognize that techniques for determining or limiting transmission time can be employed, including but not limited to placing a time limit on retransmission using a timer.

The filters 375, 376 are low pass filters and preferably have narrower bandwidths than the filters 365, 366. The filters 375, 376 are required to remove the high frequency components that remain after signal detection in the power detectors 370, 371 and to provide an increase in signal to noise ratio by providing processing gain by reducing the detection signal bandwidth. The signals output from low pass filters 375, 376 are input to conventional analog to digital converters 380, 381.

After the analog to digital converters 380, 381 convert the analog signal representing the detected power of the RF signals to digital signals in a manner well known to those skilled in the art, the resulting digital signals are sent to the microprocessor 385. The microprocessor 385, which can also be described as a logic state machine, digital signal processor, or other digital processing and control device, can be programmed to implement all necessary control algorithms to, with a high probability of certainty, detect the presence of either F1 or F2 and initiate appropriate control functions.

Alternatively, it should be noted that comparator detectors (not shown) with adjustable threshold controls may be used in place of the analog to digital converters 380, 381 and the microprocessor 385. Further, the control outputs of the microprocessor 385 could be alternatively connected directly to digital gates to control the switching where input to these gates is taken directly from comparator detector outputs. Further input to the digital logic may come from the microprocessor 385 to allow for override control to the settings provided from the comparator detector's output. In this case the microprocessor (385) would continue to control the display functions; however, it is likely the control of the variable gain amplifier 330 would be controlled directly from the power detectors 370, 371 using analog signals.

Feedback to a user can be controlled by the microprocessor 385 via an indicator 390 which could be, but is not limited to, a series of light emitting diodes. Feedback to the user could be an indication that the wireless repeater 200 is in an acceptable location such that either or both frequencies from the wireless access point 100 and the client device 105 can be detected, or that power is supplied to the wireless repeater 200.

Once either of the frequencies F1, F2 is detected, the microprocessor 385 controls switches 345, 355. The switch 355 is switched to allow the detected signal, either on F1 or F2, which is at an IF frequency, to be routed to the input of a frequency converter 350, which is another frequency translation device similar to the mixers 320, 321. Additionally, the microprocessor 385 will set the switch 345 to allow a signal from the appropriate one of the local oscillators 340, 341 to be routed to the mixer 350 so that the IF frequency at the input to the frequency converter 350 is translated to the proper frequency at the output thereof.

An example of operation of the wireless repeater 200 will now be described using the frequency in the previous examples: F1 = 2.412GHz; F2 = 2.462GHzIF = 70MHz; LO1 = 2.342GHz; and LO2 = 2.532GHz. Assume F1 is detected and is output from the filter 361. The switch 355 is set to receive its input from the filter 361, which is F1 translated to 70MHz. Since it is desired to retransmit F1 at F2 = 2.462GHz, then the switch 345 is connected to the signal from the local oscillator 341. The output of the frequency translator 350 includes two components (LO2-IF) and (LO2+IF). The desired component is LO2-IF or 2.532GHz - 70MHz = 2.462GHz. Since the frequency translator 350 produces the sum and difference of switch 345 output and switch 355 output, then a filter 335 is required to remove the undesirable term. In the example above, the undesirable term would be LO2+IF or 2.602GHZ.

The filter 335 performs the required filtering operations. The same is true if F2 was detected. A sum and difference product will occur, and the filter 335 must filter out the undesirable component. The translated and filtered version of the received signal is applied to the amplifier 330, which is preferably a variable gain amplifier. The amplifier 330 applies a variable amount of gain under control of the microprocessor 385 to make sure that the signal being feed to the amplifier 325 is in the target transmit power range. The amplifier 325 is preferably the final power amplification stage for the transmit signal. It feeds its output to the isolator 305, which then sends the signal to the antenna 300. The signal is then converted back to an electromagnetic field or radio wave by the antenna 300 in a manner well known to those of ordinary skill in the art. This radio wave is a frequency translated and power amplified version of what was received by the antenna 300.

The above descriptions and example assumes frequencies F1 and F2. It is also possible to operate with any frequencies F1 and F2 by moving the frequencies LO1, L02 of the local oscillators 340, 341 to different defined channels and checking for power detection at those channels. Once the channels are determined, the microprocessor 385 will use those frequencies, and all operations will be performed as described above. Control of the frequencies of the local oscillators 340, 341 can be accomplished by the microprocessor 385 or by user tuning. In the case of user tuning for the control of the selected frequencies, the repeater would have a set of switches (rotary or other) that a technician would set at the time of installation to specify the frequencies of operation.

Those of ordinary skill in the art will recognize that the point at which the input signal is down converted from RF to a digital signal may be altered such that more or fewer functions are performed in the RF domain or the digital domain. Further, multiple devices such as the wireless gateway (base unit) 100 or client devices 104, 105 may be utilized in the present invention. The repeater 200 will detect and retransmit signals from any of these devices. The devices 100, 104 or 105 communicate with each other within the protocol of a system (such as 802.11) that provides that the desired recipient of the retransmitted signal is identified. Thus, the repeater 200 may serve many master devices.

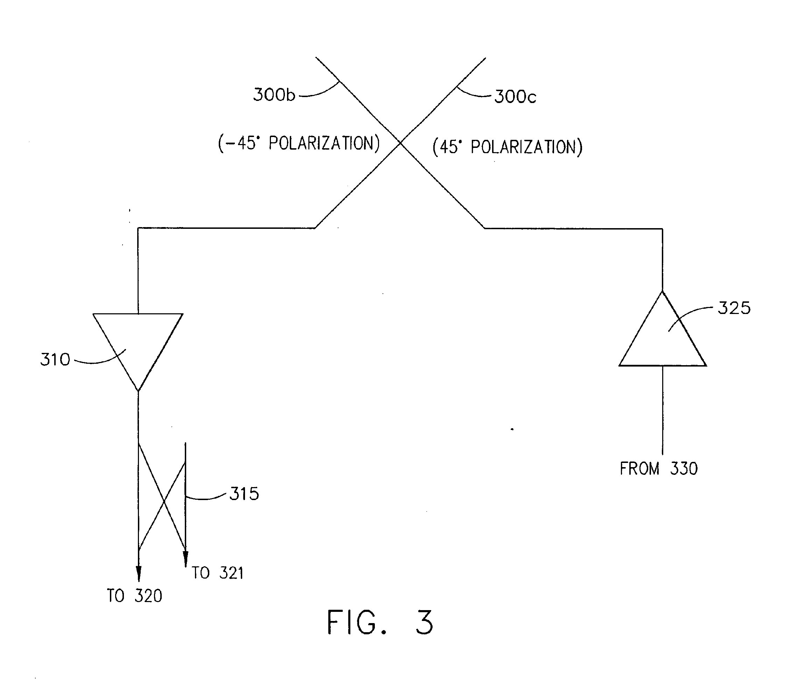

Referring to Figure 3, in which components identical to those in Figure 2 are identified by the same reference numbers used in Figure 2, an alternative embodiment utilizing dual orthogonally, or cross, polarized antennas is shown. In this case, two antennas 300b, 300c replace the single antenna 300 and isolator 305 of Figure 2. In this embodiment, one of the cross-polarized antennas 300b is connected to the power amplifier 355. The other antenna 300c, of opposite polarization, is connected to the LNA 310. The cross-polarized antennas 300b, 300c may be co-located or separated by some distance as allowed by the packaging of the repeater 200. The orthogonal or cross polarization allows for isolation of the transmitted signals from the PA 325 from the received signals into the LNA 310, and enables performance of a similar function to that performed by the isolator 305 in Figure 2.

Referring to Figure 4, in which components identical to those in Figure 2 are identified by the same reference numbers used in Figure 2, an alternative embodiment utilizing dual directional antennas is shown. This embodiment substitutes two high gain directional antennas 300d, 300e, and switches 500, 501, 502 for the antenna 300 and isolator 305 in Figure 2. This embodiment differs from the previously described embodiments in that it allows the repeater 200 to be used in the middle of a point-to-point time and to benefit from the use of the high gain directional antennas 300d, 300e. For this embodiment, it is required that the repeater 200 be able to receive or transmit from each of the two directional antennas 300d, 300e due to the spatial selectivity of each of the antennas.

In this configuration, the switches 500, 501 are nominally set to receive more by control lines 503, 505 respectively, such that LNAs 310b, 310c are connected to the directional antennas 300d, 300e, respectively. The LNAs 310b, 310c are connected to the mixers 320, 321 respectively. The operation of the detection and IF delay process is identical to that discussed in connection with Figure 2. Once a signal from an antenna (300d for example) is detected, the control lines 503, 505 are set to disconnect the LNA 310c from the directional antenna 300e on which the signal is not present, and to connect the antenna 300e to the power amplifier 325 for the duration of the transmission. The control lines 503, 504, 505 are for setting switches 500, 501, 502 respectively and are coupled to the microprocessor 385, or to other digital control logic as previously described.

The invention is described herein in detail with particular reference to presently preferred embodiments. However, it will be understood that variations and modifications can be effected within the scope and spirit of the invention.

## Claims

1. A wireless local area network including at least first and second bi-directional communication frequencies, comprising:
a first communication device capable of transmitting and receiving data on said at least first and said second bi-directional communication frequencies, wherein said first communication device transmits and receives data using a time division duplex format on either of said at least first or second bi-directional communication frequencies,
a second communication device capable of transmitting and receiving data on said at least first and said second bi-directional communication frequencies, wherein said second communication device transmits and receives data using said time division duplex format on either of said at least first or second bi-directional communication frequencies, and
a repeater capable of communicating between said first and second communication devices on one of said at least first or second bi-directional communication frequencies different from that used by one of said first and second communication devices and of receiving a signal of either of said at least first and second bi-directional communication frequencies simultaneously.

2. The wireless local area network of Claim 1, wherein said repeater includes:
a receiver for receiving signals on either of said at least first and second bi-directional communication frequencies simultaneously,
a signal detector operatively coupled to said receiver for determining if a signal is present on one of said at least first and second bi-directional communication frequencies,
a frequency converter operatively coupled to said signal detector for converting said signal present on said one of said at least first and second bi-directional communication frequencies to a converted signal on the other one of said at least first and second bi-directional communication frequencies, and
a transmitter for transmitting said converted signal on the other of said at least first and second bi-directional communication frequencies.

3. The wireless local area network of Claim 1 or 2, wherein at least one of said first or said second communication devices is connected to a wired network and serves as a wireless gateway

4. A method for communicating in a wireless local area network including at least first and second bi-directional communication frequencies, comprising:
transmitting and receiving data on said at least first and said second bi-directional communication frequencies using a time division duplex format on either of said at least first or second bi-directional communication frequencies,
transmitting and receiving data on said at least first and said second bi-directional communication frequencies using said time division duplex format on either of said at least first or second bi-directional communication frequencies, and
communicating between said first and second communication devices using said time division duplex format on one of said at least first or second bi-directional communication frequencies different from that used by one of said first and second communication devices and receiving a signal of either one of said at least first and second bi-directional communication frequencies simultaneously.

5. The method for communicating in a wireless local area network of claim 4, wherein the step of communicating comprises:
simultaneously receiving a signal on either of said at least first and said second bi-directional communication frequencies,
determining if said signal is present on one of said at least first and second bi-directional communication frequencies,
converting said signal present on said one of said at least first and second bi-directional communication frequencies to a converted signal on the other of said at least first and second bi-directional communication frequencies, and
transmitting said converted signal on the other of said at least first and second bi-directional communication frequencies.

6. A network operating on at least first and second bi-directional communication frequencies, comprising:
a base unit for transmitting and receiving data on said at least first and second bi-directional communication frequencies using a time division duplex protocol on either of said at least first or second bi-directional communication frequencies,
a client unit for transmitting and receiving data on said at least first and said second bi-directional communication frequencies using said time division duplex protocol on either of said at least first or second bi-directional communication frequencies, and
a repeater capable of communicating between said base unit and said client unit using said time division duplex protocol on one of said at least first or second bi-directional communication frequencies different from that used by said client unit and of receiving a signal of either of said at least first and second bi-directional communication frequencies simultaneously.

7. The network of Claim 6, wherein said repeater includes:
a receiver for receiving signals on said at least first and second bi-directional communication frequencies simultaneously,
a signal detector operatively coupled to said receiver for determining if a signal is present on at least one of said at least first and second bi-directional communication frequencies,
a frequency converter for converting said signal present on said first bi-directional communication frequency to a converted signal on said second bi-directional communication frequency, and
a transmitter for transmitting said converted signal on said second bi-directional communication frequency.

8. The network of Claim 6 or 7, wherein duration of transmission of said detected signal on one of said at least first and second bi-directional communication frequencies is based at least in part on a time duration counter started when said detected signal is detected.

9. The network of Claim 7, wherein said receiver is connected to a first antenna and said transmitter is connected to a second antenna, wherein said first and second antennas have largely orthogonal polarizations.

10. The network of Claim 7, wherein said receiver for each of said at least first and second bi-directional communication frequencies is connected to at least two switches respectively, each of which is coupled to at least two directional antennas respectively and to an additional switch, which in turn is coupled to at least one transmitter.

11. A method for communicating in a network operating on at least first and second bi-directional communication frequencies, comprising:
transmitting and receiving data on said at least first and second bi-directional communication frequencies using a time division duplex protocol on either of said at least first or second bi-directional communication frequencies by a base unit,
transmitting and receiving data on said at least first and said second bi-directional communication frequencies using said time division duplex protocol on either of said at least first or second bi-directional communication frequencies by a client unit, and
communicating between said base unit and said client unit using said time division duplex protocol on one of said at least first or second bi-directional communication frequencies different from that used by said client unit and receiving a signal of either of said at least first and second bi-directional communication frequencies simultaneously by a repeater.
